Europäisches Patentamt

European Patent Office

Office européen des brevets

(11) Publication number: **0 074 606**
**B1**

(12) **EUROPEAN PATENT SPECIFICATION**

(45) Date of publication of patent specification: **13.06.90**

(51) Int. Cl.⁵: **H 01 S 3/23, H 01 S 3/094**

(21) Application number: **82108227.8**

(22) Date of filing: **07.09.82**

(54) **Cascaded dye laser cavities.**

(30) Priority: **11.09.81 CA 385678**

(43) Date of publication of application:
**23.03.83 Bulletin 83/12**

(45) Publication of the grant of the patent:
**13.06.90 Bulletin 90/24**

(84) Designated Contracting States:
**AT BE CH DE FR GB IT LI NL**

(56) References cited:
**JOURNAL OF APPLIED PHYSICS, vol. 37, no. 5, April 1966, pages 2004-2006, New York, US; D.ROESS: "Giant pulse shortening by resonator transients".**

**IEEE JOURNAL OF QUANTUM ELECTRONICS, vol. QE-11, no. 8, August 1975, pages 602-609, New York, US; C.LIN: "Studies of relaxation oscillations in organic dye lasers".**

(73) Proprietor: **PRA Laser Inc.**
**45 Meg Drive**
**London, Ontario, N6E 2V2 (CA)**

(72) Inventor: **Chiu, Pay Hung**
**1006 Jalna Blvd.**
**London Ontario N6E 2R4 (CA)**

(74) Representative: **Kuhnen, Wacker & Partner**
**Schneggstrasse 3-5 Postfach 1553**
**D-8050 Freising (DE)**

(56) References cited:
**APPLIED PHYSICS LETTERS, vol. 26, no. 7, April 1975, pages 389-391, New York, US; C.LIN et al.: "Subnanosecond tunable dye laser pulse generation by controlled resonator transients".**

**APPLIED PHYSICS, vol. 23, no. 2, October 1980, pages 135-140, Heidelberg, DE; E.E.MARINERO et al.: "A novel picosecond-pulse dye laser system".**

**IEEE JOURNAL OF QUANTUM ELECTRONICS, vol. QE-12, no. 7, July 1976, pages 442-443, New York, US; K.KATO: "Near-infrared dye laser pumped by a carbazine-122 dye laser".**

Courier Press, Leamington Spa, England.

## Description

This invention relates to dye lasers. More particularly, the invention relates to a method and apparatus for producing stable and reproducible ultra-short lasing radiation pulses from dye laser cavities.

There are several applications for lasing radiation pulses having a duration in the picosecond regime including ultra-short time resolving spectroscopy. For most applications, it is desirable to produce stable and reproducible ultra-short lasing radiation pulses. By stable pulses it is meant pulses that are essentially a single well defined pulse. However, by referring to stable pulses it is not intended to preclude the possibility of single well defined pulses which may be followed by relatively small damped relaxation oscillations or ringing. A pulse would not be classified as stable if it is followed by damped relaxation oscillations that have an amplitude in excess of a significant percentage of the maximum amplitude of the initial or single well defined pulses. Reproducibility of the pulses is the requirement that all the pulses are stable pulses notwithstanding variations in the power or duration of the incoming pumping pulses.

In the past, laser systems using mode-locking have been used to produce pulses having a duration of approximately 10 picoseconds or less. However, these systems are very expensive, have low output power, require considerable maintenance and have a limitation in their output wavelength.

In the Journal of Applied Physics, Volume 37, No. 5 (1966) 2004 D. Roess, developed a "Resonator Transient" theory. This theory proposed the method of pulse shortening by pumping a laser oscillator or cavity having transient characteristics such that the resulting pulse is shorter than the pump pulse.

Hereinafter, the duration of a pulse will be taken to mean the commonly accepted definition of full width half maximum. That is to say, the duration of that portion of the pulse which is in excess of one half of the maximum amplitude of the pulse.

H. Salzmann and H. Strohwald, Physics Letter 57A (1976) 41 report emission of 10 picosecond pulses from a longitudinally pumped dye laser cell with a .04 picosecond photon cavity lifetime. Because of the extremely short photon cavity lifetime, single pulses could only be obtained when pumping was just above the threshold. Threshold is the minimum pumping energy required to produce a lasing action in the dye laser cavity. A further example of the difficulty involved in the pumping of a single stage dye laser cavity is reported in E. Aussenegg and A. Leitner, Optics Communication, Vol. 32 No. 1, p. 121. For resonator lengths of less than .5 mm, which resulted in a photon cavity lifetime of approximately 8 picoseconds, an irregular sequence of relaxation pulses was observed. With a resonator length of .5 mm the duration of the output pulses from the dye laser cavity was approximately 50 picoseconds.

In the Salzmann and Strohwald experiments the dye laser cell was pumped by a high pressure nitrogen laser producing pulses having a duration of approximately 100 picoseconds. In the Aussenegg and Leitner experiments the dye laser cavity was pumped with pulses having a duration of approximately 300 picoseconds. Aussenegg and Leitner note that if the pump pulses were shortened by raising the nitrogen laser pressure, a corresponding reduction of the dye laser resonator length should yield pulses shorter than 10 picoseconds. However, there are attendant problems with generating short duration pumping pulses by increasing the pressure in the nitrogen laser. Practical nitrogen lasers have an output duration of approximately 300 picoseconds or more. Eximer lasers having the same physical configuration as the aforementioned nitrogen lasers are also excellent pumping sources but they have output durations of approximately 1 nanosecond.

In practice, the duration of the pumping pulses can vary over a broad range. This variation has made it impractical to produce stable and reproducible ultra-short lasing radiation pulses emerging from just one dye laser cavity. As Aussenegg and Leitner note, Salzmann and Strohwald could only obtain single pulses when the cavity was pumped close above threshold with their extremely short photon cavity lifetime. Variations in the pumping pulses would produce unstable pulses.

In the IEEE Journal of Quantum Electronics, Volum QE-11, No. 8, August 1975. Shinlon Lin reports a study of relaxation oscillations in organic dye lasers. He demonstrates that when the ratio of the pumping power to the threshold power of the dye laser is decreased, the output from the dye laser goes from uncontrolled spiking to a sequence of well defined damped relaxation oscillations to a single spike output. Consistent with the Aussenegg and Leitner experiments, he shows that with the choice of particular parameters for the dye laser cavity a single spike of a duration considerably shorter than that of the pumping pulse can be produced by carefully controlling the pumping power. These results are also reported in "Applied Physics Letters', Vol. 26, No. 7, April 1975, pages 389 to 391.

Therefore, in the past it has been impossible to reliably produce stable ultra-short lasing radiation pulses having a duration of less than 50 picoseconds other than by the mode-locking method. This is due to the fact that as the ratio of the duration of the pumping pulse to the photon cavity lifetime of the dye laser cavity becomes too large, stable pulses can only be obtained when the pumping power is very close to threshold. This critical limitation on the pumping power, coupled with the fact that each pumping pulse might not have exactly the same power and duration, has made it impractical to produce stable and reproducible ultra-short lasing radiation pulses of duration less than 50 picoseconds in the past.

If only a single dye laser cavity is used it is impossible to reliably produce ultra-short lasing radiation pulses having a duration of less than 50 picoseconds when the cavity is pumped by pulses having a duration in excess of 300 picoseconds. If the photon cavity lifetime is chosen so that sufficient short pulses are produced, the resultant pulses will not be stable and reproducible. In the past, the use of a single dye laser cavity has resulted in a trade-off between reproducibility and shortness of duration, both factors being impossible to achieve simultaneously.

One example of a cascade pumping scheme is reported by K. Kato in 'IEEE Journal of Quantum Electronics", July 1976, 442. A first dye laser was pumped in an off axis longitudinal pumping scheme. The lasing radiation emerging from this dye laser was directed into a second dye laser, als in the off axis longitudinal pumping scheme. The first dye laser cavity was 30 cm long and the second dye laser cavity was 40 cm long. This arrangement was not for the purpose of producing ultra-short lasing radiation output pulses but rather was for the purpose of matching the pump wavelengths to the principal absorption bands of the dye compounds used in the dye lasers. The utility of the cascade pumping scheme was clearly demonstrated by the fact that about a 9 percent overall energy conversion efficiency was obtained wheras direct pumping of the dye in the second dye laser cavity resulted in an energy conversion efficiency of less than 1 percent. Although cascade pumping schemes have been used in dye laser arrangements in the past, they have been used for the purpose of overall energy conversion efficiency and flexibility in the output lasing radiation wavelength rather than for the purpose of producing stable and reproducible ultra-short lasing radiation pulses. The present invention uses a cascaded pumping scheme for dye laser cavities where the photon cavity lifetime of each dye laser cavity is chosen so that stable and reproducible ultra-short lasing radiation pulses emerge from the final stage.

The apparatus and the method, according to this invention as claimed in Claim 1 and 11 respectively, produce stable and reproducible ultra-short lasing radiation pulses.

The optimum absorption wavelength of the lasing medium dye solution of each dye laser cavity of the series is close to or approximately equal to the wavelength of the lasing radiation pulses emerging from the prior dye laser cavity of the series. The arrangement may also be provided with a dye amplifier cell positioned either after the last dye laser cavity of the series or between two dye laser cavities of the series.

Preferred embodiments of the apparatus, according to the invention, in which the preferred method is carried out, are shown in the drawings wherein:

Figure 1 is a schematic view of the dye laser arrangement showing a series of three cascaded dye laser cavities;

Figure 2 is a schematic view of the dye laser arrangement showing a series of three cascaded dye laser cavities with the first dye laser cavity being transversely pumped;

Figure 3 is a schematic view of the dye laser arrangement with an amplifier cell placed between the second and third dye laser cavities; and,

Figure 4 is a schematic cross-sectional view of one embodiment of the dye laser arrangement.

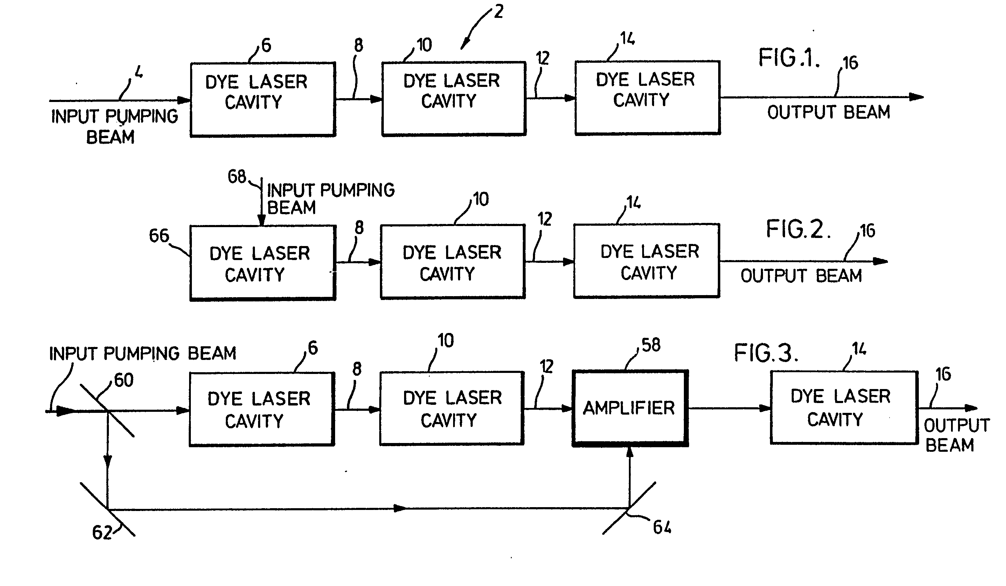

A schematic view of a series of three cascaded dye laser cavities is shown generally as 2 in Figure 1. An input pumping beam consisting of lasing radiation pulses 4 excites the first dye laser cavity 6. The lasing radiation pulses 8 emerging from the first dye laser cavity 6 are directed into a second dye laser cavity 10. The lasing radiation pulses 12 emerging from the second dye laser cavity 10 are directed into a third dye laser cavity 14. The photon cavity lifetime of each dye laser cavity is selected so that the pulses emerging therefrom are shorter than the pulses exciting the dye laser cavity. However, there is a lower bound on the photon cavity lifetime of each dye laser cavity. If the photon cavity lifetime is too small, uncontrolled spiking lasing radiation will emerge from the dye laser cavity. Since it is desired to have stable lasing radiation pulses emerging from the third or final dye laser cavity 14, the photon cavity lifetime of each dye laser cavity of the series must be sufficient for a given duration of the incoming pulses to produce an output beam 16 which is made up of stable and reproducible ultra-short lasing radiation pulses emerging from the third dye laser cavity 14.

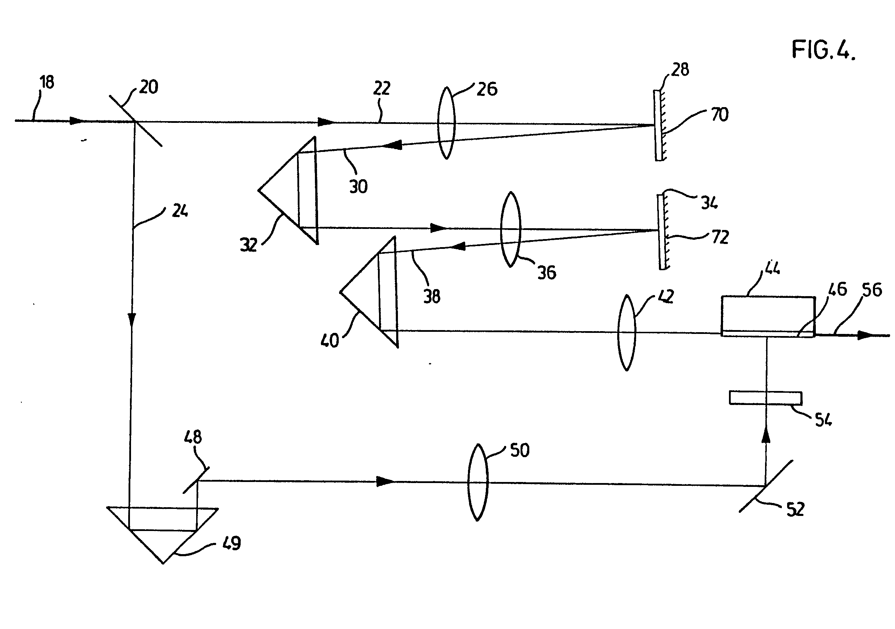

In general, the transient characteristics of a dye laser cavity are related to its photon cavity lifetime. The transient characteristics of a dye laser cavity affect the output response of the cavity for a given pumping pulse. For longitudinally pumped dye laser cavities as illustrated in Figure 4, the photon cavity lifetime is approximated by the product of two times the length of the cell divided by the product of the speed of light times one minus the square root of the product of the reflectivities of the front window and the rear mirror of the dye laser cavity. It will be appreciated to those skilled in the art that for other dye laser cavity arrangements the definition of the photon cavity lifetime must be modified accordingly. The essential point is that for a given dye laser cavity, the photon cavity lifetime, and therefore the transient characteristics of the cavity are related to the length of the cavity and the reflectivities of the surfaces in the cavity. For longitudinally pumped dye laser cavities as illustrated in Figure 4, it has been determined emperically that the lasing radiation pulses emerging from the dye laser cavity are in the order of three to four times the photon cavity lifetime of the dye laser cavity. With lower pumping powers, the duration of the output pulses decreases somewhat.

For a given dye laser cavity, if the ratio of the duration of the pumping pulse to the photon cavity lifetime of the cavity is too large, stable and reproducible output pulses can only be produced, if at all, when the power of the pumping pulses is very close to threshold. Therefore, for a given pumping pulse duration exciting a dye laser cavity, it is desirable that the photon cavity lifetime of the dye laser cavity be chosen so that stable and reproducible lasing radiation pulses emerge from the dye laser cavity even when the power of the pumping pulse is significantly higher than the threshold pumping power. To account for fluctuations in the pumping power, in practice it is desirable to choose the ratio of the duration of the pumping pulse to the photon cavity lifetime of the cavity such that stable and reproducible pulses emerge from the cavity even when the cavity is pumped by pulses having a power two to three times that of the threshold pumping power. For a given pumping pulse duration and power, the smallest photon cavity lifetime for a dye laser cavity which produces stable and reproducible lasing radiation pulses can be determined emperically. It follows that a photon cavity lifetime in excess of this minimum will also produce stable and reproducible pulses. A photon cavity lifetime should be chosen such that stable and reproducible lasing radiation pulses emerge from the dye laser cavity and such that the duration of the lasing radiation pulses emerging from the dye laser cavity is less than the duration of the lasing radiation pulses exciting the dye laser cavity. As will be later discussed, it is not strictly necessary that stable and reproducible lasing radiation pulses emerge from the first and intermediate dye laser cavities of the series. To create a lasing action in a dye laser cavity it is necessary that the duration of the pumping pulse be greater than the time it takes radiation to make one round trip in the dye laser cavity. In practice, the photon cavity lifetime is chosen such that there is a significant reduction in duration at each stage.

By way of example, for the type of dye laser cavity as illustrated in Figure 4, it has been determined empirically that if the photon cavity lifetime is in excess of approximately 1/15 of the pumping pulse duration, stable and reproducible pulses can be obtained even when the cavity is pumped two to three times above threshold. Indeed, it has been determined that even when the ratio of the photon cavity lifetime to the pumping pulse duration is as small as approximately one fiftieth, stable and reproducible pulses can be obtained when the cavity is pumped much closer to threshold.

The essential consideration is that the photon cavity lifetime of each dye laser cavity of the series be sufficient for a given duration of the incoming pumping pulses to produce stable and reproducible ultra-short lasing radiation pulses emerging from the final dye laser cavity 14 of the series. Stated another way, for a given duration of incoming pumping pulses, the maximum ratio of the duration of lasing radiation pulses exciting each dye laser cavity of the series to the photon cavity lifetime of that respective dye laser cavity of the series is determined by the maximum possible reduction in pulse duration of the pulse exciting that respective dye laser cavity of the series which produces stable and reproducible ultra-short lasing radiation pulses emerging from the final dye laser cavity of the series. It will be appreciated that for the lasing radiation pulses 8 emerging from the dye laser cavity 6 and the lasing pulses 12 emerging from dye laser cavity 10, it is not absolutely essential that they be stable and reproducible. The lasing radiation pulses 8 and 12 may have damped relaxation oscillations. What is important is that the lasing radiation pulses 12 exciting dye laser cavity 14 be such that stable and reproducible ultra-short lasing radiation pulses 16 emerge from the dye laser cavity 14. If the lasing radiation pulses emerging from dye laser cavity 6 and dye laser cavity 10 have damped relaxation oscillations following the initial spike, the damped relaxation oscillations must not be of sufficient power and duration so as to cause a secondary pulse or damped relaxation oscillations to emerge from the final dye laser cavity 14 of the series.

It follows that the photon cavity lifetime for each dye laser cavity of the series need not be fixed at any critical or specific value but may range between the minimum value which will produce stable and reproducible ultra-short lasing radiation pulses emerging from the final dye laser cavity of the series and a value of the photon cavity lifetime which is consistent with reduction in the duration of the pulses at each stage.

By way of example, it has been found that if the ratio of photon cavity lifetime of the first dye laser cavity of the series to the duration of its pumping pulses is approximately one fifteenth, stable and reproducible pulses emerge from the first dye laser cavity of the series. It has been found that this ratio may be decreased to approximately one thirtieth, but then damped relaxation oscilations may emerge from the first dye laser cavity. However, at this ratio any damped relaxation oscillations that do occur do not have sufficient magnitude to create a secondary pulse or damped relaxation oscillations emerging from the final dye laser cavity of the series. For the successive dye laser cavities of the series it has been found that the ratio of the photon cavity lifetime of each dye laser cavity of the series to the duration of the respective exciting pulses may be as low as one fiftieth. This lower ratio in successive stages is possible since the pulses emerging from the first dye laser cavity of the series do not have as large variations in duration and power as the pulses exciting the first dye laser cavity have.

Since the duration of the lasing radiation pulses emerging from each dye laser cavity is less than the duration of the lasing radiation pulses emerging from the prior dye laser cavity of the series, the photon cavity lifetime of each dye laser cavity of the series may be less than the photon cavity lifetime of the prior dye laser cavity of the series. It has also been found possible to provide that the photon cavity lifetime of the first dye laser cavity of the series be in excess of the photon cavity lifetime of each successive dye laser cavity of the series. This is due to the fact that the lasing radiation pulses 8 emerging from the first dye laser cavity have been sufficiently shortened relative to the duration of the input lasing radiation pulses 4 so that even if the photon cavity lifetime of each successive stage is chosen to be the same, the lasing radiation pulses exciting each successive dye laser cavity will not be of such long duration so as to result in unstable pulses emerging therefrom. The inherent pulse shortening characteristics of each dye laser cavity will ensure a reduction of the pulse length of the lasing radiation emerging from each successive stage.

Although the invention has been described thus far as a series of three cascaded dye laser cavities, it will be apparent that either two dye laser cavities or more than three dye laser cavities in series may also be employed. If a large number of dye laser cavities are cascaded in the series it may be necessary to amplify the pulses emerging from one of the intermediate dye laser cavities before directing it into the next successive dye laser cavity since there is a reduction in power of the lasing radiation at each stage.

A schematic cross-sectional view of the dye laser arrangement with a series of two cascaded dye laser cavities is shown generally in Figure 4. An input beam 18 is split with a suitable dielectric coated beam splitter 20 into two beams 22 and 24. The beam 22 is focused into the dye laser cell 28 by lens 26. The lasing radiation which is reflected by mirror 70 emerges from the dye laser cell 28, is collimated into an essentially parallel beam 30 and directed by prism 32, through lens 36, into the second dye laser cavity 34. The lasing radiation which is reflected by mirror 72 emerges from the dye laser cell 34, is collimated into an essentially parallel beam 38 by lens 36 and directed by prism 40 through lens 42 into a dye amplifier cell 44. The dye amplifier cell 4 has been excited to just below threshold in a linear active region 46, by the suitably optically delayed other portion 24 of the incoming pumping beam 18, which has been reflected by prism 49 and mirror 48, directed through lens 50 further reflected by mirror 52 and focused by cylindrical lens 54. The prism 49 is movable so as to provide an adjustment in the distance the beam 24 travels. This simply provides an adjustment in the optical delay of the beam exciting the amplifier cell 44. Alternatively, the amplifier cell 44 can be pumped by another laser or flash lamps with appropriate electronic synchronization.

The lasing radiation pulses which have been directed by lens 42 into the linear active region 46 of the amplifier cell 44 result in a stimulated emission action occurring in the amplifier cell 44 which results in amplificiation of the pulses. The length of the amplifier cell 44 is chosen to give a suitable amplification factor but should not be so long as to result in saturation. The amplifier cell may result in a further shortening of the pulses emerging from the second dye laser cell 34. The amplified pulses emerge from the dye amplifier cell as indicated by beam 56.

Since the power conversion efficiency of each dye laser cavity is significantly less than unity, it may be necessary to amplify the lasing radiation emerging from a dye laser cavity. This has been illustrated in Figure 4 where a dye amplifier cell is positioned relative to the last dye laser cavity of the series for amplifying the lasing radiation pulses emerging therefrom. In Figure 3 a dye amplifier cell is shown positioned relative to the second dye laser cavity for amplifying the lasing radiation pulses emerging therefrom and directing the amplified pulses into the third dye laser cavity. Similar to the arrangement in Figure 4, the amplifier 58 may also be excited by splitting the pumping beam by a dielectric beam splitter 60 and directing a portion of it by mirrors 62 and 64 to the amplifier cell.

In Figure 4, the two dye laser cavities of the series are longitudinally pumped. Usually the second and successive dye laser cavities of the series according to this invention are longitudinally pumped since as a general rule, longitudinally pumped dye laser cavities can be made with shorter photon cavity lifetimes than transversely pumped dye laser cavities. For the first stage however, a transversely pumped dye laser cavity may be used since its photon cavity lifetime need not be as short as the subsequent dye laser cavities' photon cavity lifetimes. As shown generally in Figure 2, the first dye laser cavity 66 of the series is transversely pumped by an input pumping beam consisting of input pumping pulses 68.

A broad class of lasing medium dye solutions may be used in each dye laser cavity of the series. However, it is desirable that the proper lasing medium dye solutions for each dye laser cavity be chosen so that the optimal absorption wavelengths of the lasing medium dye solutions are matched with the wavelengths of the pumping beams of the laser cavities containing the lasing medium dye solution. Therefore, the dye solution of the first dye laser cavity should be chosen so that its optimal absorption wavelength is close to or approximately equal to the wavelength of the lasing radiation pulses exciting the first dye laser cavity. The lasing radiation emerging from the first dye laser cavity will have a wavelength in excess of the wavelength of the lasing radiation pulses exciting the first dye laser cavity. The dye solution of the second dye laser cavity should be chosen so that its optimal absorption wavelength is close to or approximately equal to the wavelength of the lasing radiation pulses emerging from the first dye laser cavity. Similarly, the optimal absorption wavelength of the lasing medium dye solution of each dye laser cavity of the series should be chosen so that it is close to or approximately equal to the wavelength of the lasing radiation pulses emerging from the prior dye laser cavity of the series. It follows that the optimal absorption wavelength of the lasing medium dye solution of each dye laser cavity of the series is in excess of the optimal absorption wavelength of the lasing medium dye solution of the prior dye laser cavity of the series.

To set up this dye laser arrangement the following steps may be employed. Firstly, adjust the laser producing the input pumping pulse to produce a stable and optimal power output. Secondly, adjust the focusing of the lens which is directing the input lasing radiation pulses exciting the first stage of the dye laser cavity such that the lasing radiation pulses emerging therefrom have optimal power. Thirdly, align the successive dye laser cavities and adjust the lenses focusing their pumping beams such that lasing radiation pulses emerging therefrom have optimal power. Fourthly, attenuate the input lasing radiation pulses so that the output of the final dye laser cavity of the series becomes unstable or misfires due to insufficient pumping power. Finally, decrease the attenutation of the input lasing radiation pulses until the lasing radiation pulses emerging from the final dye laser cavity of the series become stable again.

Having generally described this invention, two specific examples which are not intended to be limiting will be given. A series of two longitudinally pumped cascaded dye laser cavities was used. The first dye laser cavity was excited with input lasing radiation pulses from a nitrogen gas laser having an averge duration of 350 picoseconds and approximately 50 micro-joules. The photon cavity lifetime of the first dye laser cavity was approximately 21 picoseconds and the photon cavity lifetime of the second dye laser cavity was approximately 3 picoseconds. With 80 percent attenuation on the input lasing radiation pulses lasing radiation pulses of approximately 100 picoseconds emerged from the first dye laser cavity and these pulses were stable and reproducible. The lasing radiation pulses emerging from the second dye laser cavity of the series were ultra-short (not in excess of 30 picoseconds) and were stable and reproducible. The energy of the lasing radiation pulses emerging from the second dye laser cavity of the series were approximately one half micro-joule. These pulses were amplified by a dye amplifier cell.

In the second example, a series of three cascaded dye lasers was used, the first dye laser cavity being transversely pumped and the second and third dye laser cavities being longitudinally pumped. The first dye laser cavity had a photon cavity lifetime of approximately 150 picoseconds and the second and third dye laser cavities had photon cavity lifetimes of approximatley 3 picoseconds. The lasing radiation pulses emerging from the third dye laser cavity were measured as having a duration of less than 20 picoseconds.

In both of these examples the construction of the lasing medium dye solutions was in the range of $5 \times 10^{-3} M$ to $4 \times 10^{-2} M$.

**Claims**

1. A dye laser arrangement for producing stable and reproducible ultra-short lasing radiation pulses comprising a first dye laser cavity being pumped by incoming pumping pulses (4; 68; 22), and at least one additional dye laser cavity to form a series of at least two dye laser cavities (6, 10, 14; 66, 10, 14; 28, 34) in a cascaded pumping scheme, wherein the photon cavity lifetime of each dye laser cavity of said series is sufficient for a given duration of said incoming pumping pulses to produce said ultra-short pulses (16; 38) emerging from the final dye laser cavity (14; 34) of said series, the photon cavity lifetime of the first dye laser cavity (6; 66; 28) of said series is greater than the photon cavity lifetime of each remaining dye laser cavity of said series, and wherein the photon cavity lifetime of each dye laser cavity of said series is less than the photon cavity lifetime of the prior dye laser cavity of said series, the maximum photon cavity lifetime of each dye laser cavity of said series being selected to reduce in stages the duration of said incoming pumping pulses to yield said ultra-short pulses from the final dye laser cavity of said series.

2. The arrangement according to Claim 1, characterized in that the photon cavity lifetime of the first dye laser cavity (6; 66; 28) of said series (6, 10, 14; 66, 10, 14; 28, 34) is less than one hundred picoseconds.

3. The arrangement according to Claim 1 or 2, characterized in that the optimal absorption wavelength of the lasing medium dye solution of each dye laser cavity (6, 10, 14; 66, 10, 14; 28, 34) of said series is close to or approximately equal to the wavelength of the lasing radiation pulses (8; 30) emerging from the prior dye laser cavity (6; 66; 28) of said series.

4. The arrangement according to Claim 2 or 3, characterized in that the optimal absorption wavelength of the lasing medium dye solution of each dye laser cavity (6, 10, 14; 66, 10, 14; 28, 34) of said series is in excess of the optimal absorption wavelength of the lasing medium dye solution of the prior dye laser cavity of said series.

5. The arrangement according to any one of the preceding claims, further characterized in a dye amplifier means (58; 44) being positioned relative to the last dye laser cavity (14; 34) of said series for amplifying the lasing radiation pulses (12; 38) emerging therefrom.

6. The arrangement according to any one of the preceding claims, characterized in that said dye laser cavities (6, 10, 14; 66, 10, 14; 28, 34) of said series are longitudinally pumped.

7. The arrangement according to any one of the preceding claims, characterized in that the first dye laser cavity (66) of said series (66, 10, 14) is transversely pumped and each successive dye laser cavity (10, 14) of said series being longitudinally pumped.

8. The arrangement according to any one of the preceding claims, characterized in that the photon cavity lifetime of the first dye laser cavity (6; 66; 28) of said series is greater than one thirtieth times the duration of the lasing radiation pulses pumping said first dye laser cavity, the photon cavity lifetime of each successive dye laser cavity of said series being greater than one fiftieth times the duration of the lasing radiation pulses exciting the respective dye laser cavity.

9. The arrangement according to any one of the preceding claims, characterized by comprising two dye laser cavities (28, 34), the photon cavity lifetime of the first dye laser cavity (28) being approximately 21 picoseconds and the photon cavity lifetime of the second dye laser cavity (34) being approximately 3 picoseconds, the first dye laser cavity being pumped by lasing radiation pulses (22 having a full width half maximum duration of approximately 350 picoseconds, so that said lasing radiation pulses (16; 56) emerging from the final dye laser cavity (14; 34) have a full width half maximum duration not in excess of 30 picoseconds.

10. The arrangement according to any one of Claims 1 through 8, characterized by comprising a series of three dye laser cavities (66, 10, 14), the first dye laser cavity (66) of said series being transversely pumped and having a photon cavity lifetime of approximately 150 picoseconds, the second and third dye laser cavity (10, 14) of said series being longitudinally pumped and having photon cavity life-times of approximately 3 picoseconds, the first dye laser cavity being pumped by lasing radiation pulses (68) having a full width half maximum duration of approximately 350 picoseconds, so that said lasing radiation pulses (16) emerging from the final dye laser cavity (58; 44) have a full width half maximum duration of less than 20 picoseconds.

11. A method of producing stable and reproducible ultra-short lasing radiation pulses by reducing in stages the duration of incoming pumping pulses to produce said ultra-short pulses, comprising exciting the first dye laser cavity (4; 66; 28) of a series (6, 10, 14; 66, 10, 14; 28, 34) of at least two cascaded dye laser cavities with input lasing radiation pulses (4; 68; 22), directing lasing radiation pulses (8, 12; 30) emerging from each dye laser cavity of said series into the next successive dye laser cavity of said series, wherein the photon cavity lifetime of each dye laser cavity of said series is sufficient for a given duration of said incoming pumping pulses (4; 68; 22) to produce said ultra-short pulses (16; 38) emerging from the final dye laser cavity (14; 34) of said series, the photon cavity lifetime of each dye laser cavity of said series being less than the photon cavity lifetime of the prior dye laser cavity of said series, and the maximum photon cavity lifetime of each dye laser cavity of said series being selected to thereby reduce in stages the duration of said incoming pumping pulses to yield said ultra-short pulses from the final dye laser cavity of said series.

12. The method according to Claim 11, characterized in that the photon cavity lifetime of each dye laser cavity of said series (6, 10, 14; 66, 10, 14; 28, 34) is sufficient for a given duration of said incoming pumping pulses (4; 68; 22) to produce pulses emerging therefrom having damped relaxation oscillations.

13. The method according to Claim 11 or 12 further characterized in amplifying the lasing radiation pulses (38) emerging from the last dye laser cavity (34) of said series.

14. The method according to Claim 11 or 12, further characterized in amplifying the lasing radiation pulses emerging from any one of the dye laser cavities (10) of said series and directing the amplified pulses into the next dye laser cavity (14) of said series.

**Patentansprüche**

1. Eine Farbstofflaseranordnung zum Erzeugen von stabilen und reproduzierbaren ultrakurzen Laserstrahlungspulsen mit: einem ersten Farbstofflaserresonator, der durch einfallende Pumppulse (4; 68; 22) gepumpt wird und mindestens einem zusätzlichen Farbstofflaserresonator, um eine Reihe von mindestens zwei Farbstofflaserresonatoren (6, 10, 44; 66, 10, 14; 28, 34) in einem kaskadierendem Pumpschema zu bilden, worin

die Photonenresonatorlebensdauer von jedem Farbstofflaserresonator der Reihe ausreichende ist, um für eine gegebene Dauer der einfallenden Pumppulse die ultrakurzen Pulse (16; 38) zur erzeugen, die von dem letzten Farbstofflaserresonator der Reihe (14; 34) ausgehen,

die Photonenresonsatorlebensdauer des ersten Farbstofflaserresonators (6; 66; 28) der Reihe größer ist als die Photonenresonatorlebensdauer von jedem der restlichen Farbstofflaserresonatoren der Reihe, und worin

die Photonenresonatorlebensdauer von jedem Farbstofflaserresonator der Reihe geringer ist als die Photonenresonsatorlebensdauer von dem vorangegengenen Farbstofflaserresonator der Reihe, wobei

die maximale Photonenresonatorlebensdauer von jedem Farbstofflaserresonator der Reihe so gewählt ist,

daß in Stufen die Dauer der einfallenden Pumppulse reduziert werden, um die ultrakurzen Pulse aus dem letzten Farbstofflaserresonator der Reihe hervorzubringen.

2. Anordnung nach Anspruch 1, dadurch gekennzeichnet, daß die Photonenresonatorlebensdauer des ersten Farbstofflaserresonator (6; 66; 28) der Reihe (6, 10, 14; 66, 10, 14; 28, 34) kleiner als 100 Picosekunden ist.

3. Anordnung nach Anspruch 1 oder 2, dadurch gekennzeichnet, daß die optimale Absorptionswellenlänge des Laserfarbstofflösungsmediums von jedem Farbstofflaserresonator (6, 10, 14; 66, 10, 14; 28, 34) der Reihe nahe bei oder ungefähr gleich der Wellenlänge der Laserstrahlungspulse (8; 30) ist, die von dem vorangegangenen Farbstofflaserresonator (6; 66; 28) der Reihe ausgegangen sind.

4. Anordnung nach Anspruch 2 oder 3, dadurch gekennzeichnet, daß die optimale Absorptionswellenlänge des Laserfarbstofflösungsmediums von jedem Farbstofflaserresonator (6, 10, 14; 66, 10, 14; 28, 34) der Reihe die optimale Absorptionswellenlänge des Laserfarbstofflösungsmediums des vorangegangenen Farbstofflaserresonators der Reihe überschreitet.

5. Anordnung nach einem der vorangegangenen Ansprüche, weiter gekennzeichnet durch Farbstoffverstärkervorrichtungen (58; 44), die relativ zu dem letzten Farbstofflaserresonator (14; 34) der Reihe angeordnet sind, um die Laserstrahlungspulse (12; 38) die von ihnen ausgehen, zu verstärken.

6. Anordnung nach einem der vorangegangenen Ansprüche, dadurch gekennzeichnet, daß die Farbstofflaserresonatoren (6, 10, 14; 66, 10, 14; 28, 34) der Reihe longitudinal gepumpt werden.

7. Anordnung nach einem der vorangegangenen Ansprüche, dadurch gekennzeichnet, daß der erste Farbstofflaserresonator (66) der Reihe (66, 10, 14) transversal gepumpt ist und jeder der nachfolgenden Farbstofflaserresonatoren (10, 14) der Reihe longitudinal gepumpt wird.

8. Ein Aufbau nach einem der vorangegangenen Ansprüche, dadurch gekennzeichnet, daß die Photonenresonsatorlebensdauer des ersten Farbstofflaserresonators (6; 66; 28) der Reihe größer ist als 1/30 der Dauer der Laserstrahlungspulse, die den ersten Farbstofflaserresonator pumpen, wobei die Photonenresonatorlebensdauer von jedem nachfolgenden Farbstofflaserresonator der Reihe größer ist als 1/50 der Dauer der Laserstrahlungspulse, die den jeweiligen Farbstofflaserresonator anregen.

9. Anordnung nach einem der vorangegangenen Ansprüche, dadurch gekennzeichnet, daß sie zwei Farbstofflaserresonatoren (28, 34) enthält; die Photonenresonatorlebensdauer des ersten Farbstofflaserresonator (28) ungefähr 21 Picosekunden ist und die Photonenresonatorlebensdauer des zweiten Farbstofflaserresonator (34) ungefähr 3 Picosekunden ist; der erste Farbstofflaserresonator durch Laserstrahlungspulse (22) gepumpt wird, die eine Dauer der vollen Halbwertsbreite von ungefähr 350 Picosekunden haben, so daß die Laserstrahlungspulse (16; 56) die von dem letzten Farbstofflaserresonator (14; 34) ausgehen, eine Dauer der vollen Halbwertsbreite haben, die 30 Picosekunden nicht überschreitet.

10. Anordnung nach einem der Ansprüche 1 bis 8, gekennzeichnet durch eine Reihe von drei Farbstofflaserresonatoren (66, 10, 14), wobei der erste Farbstofflaserresonator (66) der Reihe transversal gepumpt wird und eine Photonenresonatorlebensdauer von ungefähr 150 Picosekunden hat, der zweite und dritte Farbstofflaserresonator (10, 14) der Reihe longitudinal gepumpt werden und eine Photonenresonatorlebensdauer von ungefähr 3 Picosekunden haben, der erste Farbstofflaserresonator durch Laserstrahlungspulse (68) gepumpt wird, deren Dauer einer vollen Halbwertsbreite ungefähr 350 Picosekunden ist, so daß die Laserstrahlungspulse (16), die von dem letzten Farbstofflaserresonator (58; 44) ausgehen, eine Dauer der vollen Halbwertsbreite von weniger als 20 Picosekunden haben.

11. Ein Verfahren zum Erzeugen von stabilen und reproduzierbaren ultrakursen Laserstrahlungspulsen durch stufenweise Verminderung der Dauer der einfallenden Pumppulse, um ultrakurze Pulse zu erzeugen, mit:

anregen des ersten Farbstofflaserresonators (4; 66; 28) einer Reihe (6, 10, 14; 66, 10, 14; 28, 34) von mindestens zwei kaskadierenden Farbstofflaserresonatoren durch einfallende Laserstrahlungspulse (4; 68; 22);

leiten von Laserstrahlungspulsen (8, 12; 30), die von jedem Farbstofflaserresonator der Reihe ausgehen, in den nächsten der folgenden Farbstofflaserresonatoren der Reihe, wobei die Photonenresonatorlebensdauer von jedem Farbstofflaserresonator der Reihe ausreichend ist, um für eine gegebene Dauer der einfallenden Pumppulse (4; 68; 22) die ultrakurzen Pulse (16; 38) zu erzeugen, die von dem letzten Farbstofflaserresonator (14; 34) der Reihe ausgehen, wobei

die Photonenresonatorlebensdauer von jedem der Farbstofflaserresonatoren der Reihe geringer ist als die Photonenresonatorlebensdauer des vorangegangenen Farbstofflaserresonators der Reihe und wobei

die maximale Photonenresonatorlebensdauer von jedem der Farbstofflaserresonator der Reihe so gewählt wird, daß dadurch eine stufenweise Reduzierung der Dauer der einfallenden Pumppulse erreicht wird, um die ultrakurzen Pulse aus dem letzten Farbstofflaserresonator der Reihe zu liefern.

12. Verfahren nach Anspruch 11, dadurch gekennzeichnet, daß die Photonenresonatorlebensdauer von jedem Farbstofflaserresonator der Reihe (6, 10, 14; 66, 10, 14; 28, 34) ausreichend ist, um für eine gegebene Dauer der einfallenden Pumppulse (4; 68, 22) Pulse zu erzeugen, die von den Farbstofflaserrresonator ausgehen und gedämpfte Relaxationsoszillationen haben.

13. Verfahren nach Anspruch 11 oder 12, weiter gekennzeichnet durch die Verstärkung der Laserstrahlungspulse (38), die von dem letzten Farbstofflaserrresonator (34) der Reihe ausgehen.

14. Verfahren nach einem der Ansprüche 11 oder 12, weiter gekennzeichnet, durch die Verstärkung der Laserstrahlungspulse (12), die von einem der Farbstofflaserresonatoren (10) der Reihe ausgehen und durch die Leitung der verstärkten Pulse in den nächsten Farbstofflaserresonator (14) der Reihe.

**Revendications**

1. Ensemble laser à colorants permettant de produire des impulsions de rayonnement laser ultracourtes, stables et reproductibles, comprenant une première cavité de laser à colorants qui est pompée par des impulsions de pompage incomplet (4; 68; 22), et au moins une cavité de laser à colorants supplémentaire afin de former une série d'au moins deux cavités de laser à colorants (6, 10, 14; 66, 10, 14; 28, 34) suivant un schéma de pompage en cascade, où la durée de vie des photons de la cavité pour chaque cavité de laser à colorants de ladite série est suffisante pour qu'une durée donnée desdites impulsions de pompage d'entrée produise lesdites impulsions ultracourtes (16; 38) à la sortie de la cavité de laser à colorants finale (14; 34) de ladite série, la durée de vie des photons dans la cavité pour la première cavité de laser à colorants (6; 66; 28) de ladite série est plus grande que la durée de vie des photons dans la cavité pour chaque cavité de laser à colorants restante de ladite série, et où la durée de vie des photons dans la cavité pour chaque cavité de laser à colorants de ladite série est inférieure à la durée de vie dans la cavité pour la cavité de laser à colorants précédente de ladite série, la durée de vie maximale des photons dans la cavité pour chaque cavité de laser à colorants de ladite série étant choisie de manière à réduire par étapes la durée desdites impulsions de pompage d'entrée pour produire lesdites impulsions ultracourtes à la sortie de la cavité de laser à colorants finale de ladite série.

2. Ensemble selon la revendication 1, caractérisé en ce que la durée de vie des photons dans la cavité pour la première cavité de laser à colorants (6; 66; 28) de ladite série (6, 10, 14; 66, 10, 14; 28, 34) est inférieure à 100 picosecondes.

3. Ensemble selon la revendication 1 ou 2, caractérisé en ce que la longueur d'onde d'absorption optimale de la solution de colorants constituant le milieu de support de l'effet laser pour chaque cavité de laser à colorants (6, 10, 14; 66, 10, 14; 28, 34) de ladite série est voisine de ou approximativement égale à la longueur d'onde des impulsions de rayonnement laser (8; 30) sortant de la cavité de laser à colorants précédente (6; 66; 28) de ladite série.

4. Ensemble selon la revendication 2 ou 3, caractérisé en ce que la longueur d'onde d'absorption optimale de la solution de colorants constituant le milieu de support de l'effet laser pour chaque cavité de laser à colorants (6, 10, 14; 66, 10, 14; 28, 34) de ladite série possède une valeur en excès par rapport à la longueur d'onde d'absorption optimale de la solution de colorants constituant le milieu de support de l'effet laser de la cavité de laser à colorants précédente de ladite série.

5. Ensemble selon l'une quelconque des revendications précédentes, caractérisé en outre en ce qu'on moyen amplificateur à colorants (58; 44) est placé relativement à la denière cavité de laser à colorants (14; 34) de ladite série de manière à amplifier les impulsions de rayonnement laser (12; 38) sortant de celle-ci.

6. Ensemble selon l'une quelconque des revendications précédentes, caractérisé en ce que lesdites cavités de laser à colorants (6, 10, 14; 66, 10, 14; 28, 34) de ladité série sont pompées longitudinalement.

7. Ensemble selon l'une quelconque des revendications précédentes, caractérisé en ce que la première cavité de laser à colorants (66) de ladite série (66, 10, 14) est pompée transversalement et chacune des cavités de laser à colorants suivantes (10, 14) de ladite série est pompée longitudinalement.

8. Ensemble selon l'une quelconque des revendications précédentes, caractérisé en ce que la durée de vie des photons dans la cavité pour la première cavité de laser à colorants (6; 66; 28) de ladite série est supérieure au trentième de la durée des impulsions de rayonnement laser pompant ladite première cavité de laser à colorants, la durée de vie des photons dans la cavité pour chacune des cavités de laser à colorants suivantes de ladite série étant supérieure au cinquantième de la durée des impulsions de rayonnement laser excitant la cavité de laser à colorants respective.

9. Ensemble selon l'une quelconque des revendications précédentes, caractérisé en ce qu'il comprend deux cavités de laser à colorants (28, 34) la durée de vie des photons dans la cavité pour la première cavité de laser à colorants (28) étant d'environ 21 picosecondes et la durée de vie des photons dans la cavité pour la deuxième cavité de laser à colorants (34) étant d'environ 3 picosecondes, la première cavité de laser à colorants étant pompée par des impulsions de rayonnement laser (22) qui possèdent une largeur à mi-hauteur correspondant à une durée d'environ 350 picosecondes, de sorte que lesdites impulsions de rayonnement laser (16; 56) qui sortent de la cavité de laser à colorants finale (14; 34) ont une largeur à mi-hauteur correspondant à une durée qui ne dépasse pas 30 picosecondes.

10. Ensemble selon l'une quelconque des revendications 1 à 8, caractérisé en ce qu'il comprend une série de trois cavités de laser à colorants (66, 10, 14), la première cavité de laser à colorants (66) de ladite série étant pompée transversalement et ayant une durée de vie de photons dans la cavité qui vaut environ 150 picosecondes, les deuxième et troisième cavités de laser à colorants (10, 14) de ladite série étant pompées longitudinalement et ayant des durées de vie de photons dans la cavité qui valent environ 3 picosecondes, la première cavité de laser à colorants étant pompée par les impulsions de rayonnement laser (68) qui possèdent une largeur à mi-hauteur correspondant à une durée d'environ 350 picosecondes, de sorte que lesdites impulsions de rayonnement laser (16) qui sortent la cavité de laser à colorants finale (58; 44) ont une largeur à mi-hauteur correspondant à une durée de moins de 20 picosecondes.

11. Procédé permettant de produire des impulsions de rayonnement laser ultracourtes stables et reproductibles par réduction par étapes de la durée des impulsions de pompage d'entrée afin de produire lesdites impulsions ultracourtes, comprenant les opérations consistant à exciter la première cavité de laser à colorants (4; 66; 28) d'une série (6, 10, 14; 66, 10, 14; 28, 34) d'au mons deux cavités de laser à colorants en cascade à l'aide d'impulsions de rayonnement laser d'entrée (4; 68; 22), à diriger les impulsions de rayonnement laser (8, 12; 30) qui sortent de chaque cavité de laser à colorants de ladite série dans la cavité de laser à colorants immédiatement suivante de ladite série, où la durée de vie des photons dans la cavité pour chaque cavité de laser à colorants de ladite série est suffisante pour qu'une durée donnée desdites impulsions de pompage d'entrée (4; 68; 22) produise lesdites impulsions ultracourtes (16; 38) à la sortie de la cavité de laser à colorants finale (14; 34) de ladite série, la durée de vie des photons dans la cavité pour chaque cavité de laser à colorants de ladite série étant inférieure à la durée de vie des photons dans la cavité pour la cavité de laser à colorants précédente de ladite série, et la durée de vie maximale des photons dans la cavité pour chaque cavité de laser à colorants de ladite série étant choisie de manière à réduire par étapes la durée desdites impulsions de pompage d'entrée afin de produire lesdites impulsions ultracourtes à la sortie de la cavité de laser à colorants finale de ladite série.

12. Procédé selon la revendication 11, caractérisé en ce que la durée de vie des photons dans la cavité pour chaque cavité de laser à colorants de ladite série (6, 10, 14; 66, 10, 14; 28, 34) est suffisante pour qu'une durée donnée desdites impulsions de pompage d'entrée (4; 68; 22) produise des impulsions à la sortie de celle-ci qui ont des oscillations de relaxation amorties.

13. Procédé selon la revendication 11 ou 12, caractérisé en outre en ce qu'on amplifie les implulsions de rayonnement laser (38) sortant de la dernière cavité de laser à colorants (34) de ladite série.

14. Procédé selon la revendication 11 ou 12, caractérisé en outre en ce qu'on amplifie les impulsions de rayonnement laser (12) sortant de l'une quelconque des cavités de laser à colorants (10) de ladite série et on dirige les impulsions amplifiées dans la cavité de laser à colorants suivante (14) de ladite série.

FIG.1.

INPUT PUMPING BEAM

DYE LASER CAVITY

DYE LASER CAVITY

DYE LASER CAVITY

OUTPUT BEAM

FIG.2.

INPUT PUMPING BEAM

DYE LASER CAVITY

DYE LASER CAVITY

DYE LASER CAVITY

OUTPUT BEAM

FIG.3.

INPUT PUMPING BEAM

DYE LASER CAVITY

DYE LASER CAVITY

AMPLIFIER

DYE LASER CAVITY

OUTPUT BEAM

FIG.4.